(19) Europäisches Patentamt
European Patent Office
Office européen des brevets

(11) **EP 3 581 428 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(51) Int Cl.:
***B60L 7/00*** *(2006.01)*    ***B60L 7/08*** *(2006.01)*
***B60L 13/10*** *(2006.01)*    ***B65G 54/02*** *(2006.01)*
***H02K 41/02*** *(2006.01)*

(21) Anmeldenummer: **18177762.4**

(22) Anmeldetag: **14.06.2018**

(54) **KURZSCHLUSSBREMSUNG EINES LLM**

SHORT-CIRCUIT BRAKING OF AN LLM

FREINAGE PAR COURT-CIRCUIT D'UN MODULE LASER LLM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.12.2019 Patentblatt 2019/51**

(73) Patentinhaber: **B&R Industrial Automation GmbH 5142 Eggelsberg (AT)**

(72) Erfinder:
• **Weber, Andreas**
  **5020 Salzburg (AT)**
• **Faschang, Leopold**
  **5142 Eggelsberg (AT)**
• **Brucker, Stefan**
  **5020 Salzburg (AT)**

(74) Vertreter: **Patentanwälte Pinter & Weiss OG Prinz-Eugen-Straße 70 1040 Wien (AT)**

(56) Entgegenhaltungen:
**EP-A1- 0 294 541**    **EP-A1- 3 424 769**
**EP-A2- 0 289 868**    **DE-A1- 2 235 705**
**US-A1- 2012 193 172**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die gegenständliche Erfindung betrifft ein Verfahren zum Ansteuern einer Mehrzahl von Antriebspulen eines Langstatorlinearmotors, wobei die Antriebspulen in einem Normalbetrieb derart bestromt werden, dass ein mit einer Transporteinheit gekoppeltes Magnetfeld entlang einer Bewegungsrichtung bewegt wird um die Transporteinheit entlang der Bewegungsrichtung zu bewegen, wobei bei einem Bremsvorgang der Transporteinheit in einen geregelten Kurzschlussmodus geschaltet wird, in welchem zumindest ein Teil der Antriebspulen zumindest über einen ersten Zeitabschnitt in einem Kurzschluss betrieben wird. Die gegenständliche Erfindung betrifft ebenso einen Langstatorlinearmotor mit einer Mehrzahl Antriebspulen und zumindest einer Transporteinheit, wobei eine über einen Spulenregler gesteuerte LLM-Steuerung vorgesehen ist, die ausgestaltet ist die Antriebspulen derart zu bestromen, dass ein mit der Transporteinheit gekoppeltes Magnetfeld entlang einer Bewegungsrichtung bewegt wird um die Transporteinheit entlang der Bewegungsrichtung zu bewegen.

Um den Anforderungen moderner, flexibler Logistikeinheiten gerecht zu werden, werden vermehrt Langstatorlinearmotoren (LLM) als Ersatz für konventionelle Stetigförderer, beispielsweise rotativ-zu-linear Übersetzeinheiten, wie beispielsweise rotative Motoren an einem Förderband, eingesetzt. Langstatorlinearmotoren zeichnen sich durch eine bessere und flexiblere Ausnützung über den gesamten Arbeitsbereich aus. So können die Bereiche der Geschwindigkeit und Beschleunigung von Null bis zum Maximum ausgenutzt werden. Zudem sind eine individuelle Regelung bzw. Steuerung der beweglichen Transporteinheiten (Shuttles), eine verbesserte Energieausnützung, die Reduktion der Wartungskosten aufgrund der geringeren Anzahl an Verschleißteilen, eine einfacher Austausch der Transporteinheiten, ein effizientes Monitoring und eine einfachere Fehlerdetektion, eine Optimierung des aufgenommen Stromes durch Eliminierung von Stromlücken als Vorteile aufzuzählen.

Ein Stator eines Langstatorlinearmotors besteht aus einer Vielzahl von in Bewegungsrichtung der Transporteinheiten nebeneinander angeordneten Antriebspulen, die zusammen den Stator des Langstatorlinearmotors bilden. Diese Antriebspulen werden einzeln oder in Gruppen angesteuert, wobei es im Betrieb des Langstatorlinearmotors oftmals auch erwünscht oder notwendig ist die Polarität, d.h. die Stromrichtung der Antriebspulen zu ändern. Durch das Ansteuern der Antriebspulen wird ein bewegtes Magnetfeld erzeugt, das mit Erregungsmagneten (in der Regel Permanentmagnete) an einer Transporteinheit des LLM zusammenwirkt, um eine Vortriebskraft auf die Transporteinheit zu erzeugen und die Transporteinheit so entlang des Stators zu bewegen. Zum Bestromen der Antriebspulen zur Erzeugung des Magnetfeldes wird in der Regel eine Betriebsspannung zwischen einem ersten Betriebspotential und einem zweiten Betriebspotential zur Verfügung gestellt. Solche Langstatorlinearmotoren sind in verschiedenen Ausgestaltungen hinlänglich bekannt, beispielsweise aus der WO 2013/143783 A1, der US 6,876,107 B2, der US 2013/0074724 A1 oder der WO 2004/103792 A1, um nur einige zu nennen.

Eine Möglichkeit Antriebspulen anzusteuern und eine Änderung der Polarität der Spulenspannung zu ermöglichen wäre die Verwendung einer Vollbrücke, wie sie in der US 2006/0220623 A1 offenbart ist. Die Betriebsspannung wird dabei jeweils an den ersten und zweiten Zweig der Vollbrücke angelegt, die Antriebspule wird in den Querzweig der Vollbrücke geschaltet. Durch geeignete Ansteuerung der vier Schalter (Bipolar-Transistoren, MOS-FETs, IGBTs, etc.) der Vollbrücke kann an die Antriebspulen eine gewünschte, bzw. durch eine Spulenregelung vorgegebene, Spulenspannung in gewünschter Polarität und Höhe an die Antriebspulen angelegt werden. Um die Antriebspulen einzeln ansteuern zu können, muss jede Antriebspule mit einer Vollbrücke versehen werden. Dies bedeutet jedoch, dass pro Antriebspule vier Schalter benötigt werden. Bei einer naturgemäß hohen Anzahl an Antriebspulen eines LLM-Stators entstehen somit hohe Kosten und ein hoher schaltungstechnischer Aufwand durch die hohe Anzahl an Schaltern.

Die AT 518 721 A1 offenbart die Verwendung von Halbbrücken anstatt von Vollbrücken, wobei ein Mittelpunkt der Halbbrücken jeweils mit einem ersten Anschluss von Antriebspulen verbunden wird. Die zweiten Anschlüsse der Antriebspulen werden zu einem Regelungspunkt verbunden und durch eine Regelungseinheit ein Istpotential am Regelungspunkt auf ein vorgegebenes Potential geregelt. So kann trotz Verwendung von Halbbrücken eine positive und eine negative Spulenspannung an die Antriebspulen angelegt werden.

Es kann erwünscht sein eine Transporteinheit schnell abzubremsen. In Ausnahmesituationen, wie bei Gefährdung der Sicherheit von Personen im Bereich des Langstatorlinearmotors, Überbelastungen des Systems, Spannungsüberhöhungen aber auch z.B. Verlust der Positions- bzw. Geschwindigkeitsinformation, kann es z.B. notwendig sein einen sofortigen Notstopp einzuleiten, womit alle oder ein Teil der Transporteinheiten (z.B. alle Transporteinheiten eines gewissen Sektors) zum Stillstand gebracht werden müssen. Die US 2012/193172 offenbart beispielsweise spezielle an einem Linearmotor angebrachte Bremswindungen zum Erzeugen einer Bremswirkung. Solche zusätzlichen Bremswindungen erhöhen aber den konstruktiven Aufwand und die Kosten für den Langstatorlinearmotors und sind demnach unerwünscht.

Die EP 0294 541 A1 beschreibt einen Linearmotor, welcher eine Kurzschlussbremsung, d.h. einen Bremsvorgang durch Kurzschließen von Spulen, aufweist. Die EP 0 289 686 A2 beschreibt zwar ein Kurzschließen von Spulen, jedoch keinen damit verbundenen Bremsvorgang. Die DE 22 35 705 A1 offenbart eine Transporteinheit, welche eine Kurzschlussbremsung aufweist.

Es ist eine Aufgabe der gegenständlichen Erfindung auf einfache Weise ein sicheres Abbremsen einer Transporteinheit eines Langstatorlinearmotors zu ermöglichen.

Diese Aufgabe wird erfindungsgemäß gelöst, indem im geregelten Kurzschlussmodus der zumindest eine Teil der Antriebspulen zumindest über einen zweiten Zeitabschnitt in einem Leerlauf betrieben wird.. Die Aufgabe wird ebenso durch einen Kurzschlussregler gelöst, der ausgestaltet ist bei einem Bremsvorgang der Transporteinheit zumindest einen Teil der Antriebspulen zumindest über einen ersten Zeitabschnitt kurzschließen und zumindest über einen zweiten Zeitabschnitt in einem Leerlauf zu betreiben.

Nachdem ein Bremsvorgang einer Transporteinheit eingeleitet wurde, werden üblicherweise die relevanten Antriebsspulen stromlos geschaltet (was im Grunde einem Leerlauf entspricht) um die Transporteinheit nicht mehr aktiv weiterzubewegen. Die Transporteinheit bewegt sich jedoch ohne geeignete Aktionen entlang des Stators des Langstatorlinearmotors bis zum Stillstand mit geringer Verzögerung (aufgrund der erwünschten reibungsarmen Lagerung bzw. Führung der Transporteinheiten an der Transportstrecke) weiter, was unerwünscht ist, da die Transporteinheiten in der Regel sehr rasch zum Stillstand gebracht werden sollen. Bei Weiterbewegung einer Transporteinheit wird über ein durch die Erregungsmagnete selbst ein bewegtes Magnetfeld erzeugt. Dieses Magnetfeld bewegt sich mit der Transporteinheit entlang des Stators und weist damit auch die Geschwindigkeit der Transporteinheit auf. Dabei wirkt dieses Magnetfeld auch mit den Antriebspulen des Stators zusammen, was bei offenen Klemmen der Antriebsspulen keinen Effekt hätte. Die Antriebspulen, die mit der Transporteinheit magnetisch gekoppelt sind, induzieren jedoch bei kurzgeschlossenen Klemmen über eine Elektro-Magnetische-Kraft (EMK) jeweils einen Spulenkurzschlussstrom. Dieser Spulenkurzschlussstrom wirkt nach der Lenz'schen Regel dem durch die Transporteinheit hervorgerufenen Magnetfeld entgegen, womit die Transporteinheit relativ rasch abgebremst wird. Somit wird der Kurzschluss des zumindest einen Teils der Antriebspulen vorzugsweise während des gesamten Bremsvorgangs, d.h. bis zum Stillstand der Transporteinheit aufrechterhalten. Das würde bedeuten, dass der erste Zeitabschnitt sich über den gesamten Bremsvorgang erstreckt, wobei der Kurzschluss nach dem Stillstand der Transporteinheit aufgehoben werden kann. Wenn der erste Zeitabschnitt kürzer gewählt wird, dann kann die Transporteinheit zumindest auf eine unkritische Geschwindigkeit abgebremst werden, aus der die Transporteinheit dann z.B. "ausrollen" kann.

Bei einem Kurzschluss sind die betreffenden Spulenklemmen geschlossen, bei einem Leerlauf sind die betreffenden Spulenklemmen geöffnet. Bei geeigneter Wahl des ersten und zweiten Zeitabschnitts kann der Kurzschlussstrom (als Summe der jeweils fließenden Spulenkurzschlussströme) derart geregelt werden, dass eine größere Stromkomponente in Kraftrichtung (d.h. in einem kartesischen feldorientierten dq-Koordinatensystem in q-Richtung) erreicht wird. Damit wird der Anteil des Kurzschlussstroms, welcher der der Vortriebsbewegung dienenden Feldrichtung entgegenwirkt, erhöht, womit eine größere Bremswirkung als bei einem dauerhaften Kurzschluss erzielt wird und womit die Transporteinheit noch schneller zum Stillstand kommt. Somit kann selbst bei geringeren Kurschlussströmen eine höhere Bremskraft und damit eine bessere und raschere Abbremsung der Transporteinheit erzielt werden. Zudem werden eine geringere Strombelastung und eine geringere Feldschwächung erreicht. Eine geringere Feldschwächung bedingt zudem eine geringere Normalkraftabnahme, womit unter Umständen zusätzlich verhindert werden kann, dass die Transporteinheit bei einer bestimmten Geschwindigkeit z.B. in einem Kurvenbereich der Transportstrecke vom Stator abheben kann.

Vorteilhafterweise wird ein gesamter durch die Antriebspulen fließender Kurzschlussstrom ermittelt und ein Soll-Kurzschlussstrom mit einer maximalen vortriebskraftbildende Kurzschlussstromkomponente icq mittels einer vorgegebenen Beziehung ermittelt. Im geregelten Kurzschlussmodus kann in einer Kurzschlussphase, in welcher der Kurzschlussstrom kleiner als der Soll-Kurzschlussstrom ist, der zumindest eine Teil der Antriebspulen im Kurzschluss betrieben werden. In einer Leerlaufphase, in welcher der Kurzschlussstrom dem Soll-Kurzschlussstrom erreicht oder überschreitet, kann der zumindest eine Teil der Antriebspulen im Leerlauf betrieben werden.

Es kann aber im geregelten Kurzschlussmodus in einer Kurzschlussphase, in welcher der Kurzschlussstrom kleiner als der Soll-Kurzschlussstrom multipliziert mit einem Faktor ist, der zumindest eine Teil der Antriebspulen im Kurzschluss betrieben werden. In einer Mischphase, in welcher der Kurzschlussstrom dem Soll-Kurzschlussstrom multipliziert mit einem Faktor entspricht oder überschreitet, wird der zumindest eine Teil der Antriebspulen abwechselnd im Kurzschluss und im Leerlauf betrieben. In einer Leerlaufphase, in welcher der Kurzschlussstrom dem Soll-Kurzschlussstrom multipliziert mit dem Term 2 minus Faktor a entspricht oder überschreitet, wird der zumindest eine Teil der Antriebspulen im Leerlauf betrieben.

Vorzugsweise entspricht die vorgegebene Beziehung f:

$$ic\_soll = \frac{1}{\sqrt{2}} \frac{\Psi}{L},$$

wobei $\Psi$ dem Hauptfluss und L der ungesättigten Induktivität entspricht und die Beziehung aus der Ständerspannungsgleichung bei einer mehrphasigen Anspeisung abgeleitet werden kann.

Es kann in der Mischphase der zumindest eine Teil der Antriebspulen jeweils abwechselnd über ein Kurzschlussintervall im Kurzschluss betrieben werden und über ein Leerlaufintervall im Leerlauf betrieben wird, wobei die Dauer des Kurzschlussintervalls zur Dauer des Leerlaufintervalls bestimmt und vorteilhafterweise über ein Polynom dritter Ordnung mit einer Fehlerabweichung berechnet wird.

Weiters kann ein Faktor von 0.85 gewählt werden, welcher eine besonders gute Bremswirkung bewirkt, wie sich auch in der Praxis bestätigt hat.

Ganz besonders vorteilhaft ist es, wenn nur die mit der Transporteinheit magnetisch gekoppelten Antriebspulen in den geregelten Kurzschlussmodus geschaltet werden. Damit müssen nicht alle Antriebsspulen des gesamten Langstatorlinearmotors in den Kurzschlussmodus geschaltet werden. So kann beispielsweise nach Bedarf auch nur eine Transporteinheit abgebremst werden, wogegen die weiteren Transporteinheiten vom Bremsvorgang nicht betroffen sind.

Hierzu können die mit der Transporteinheit magnetisch gekoppelten Antriebspulen mittels eines Positionssensors bestimmt werden. Dies kann vorteilhaft sein, wenn ohnehin bereits Positionssensoren am Langstatorlinearmotor vorgesehen sind.

Die mit der Transporteinheit magnetisch gekoppelten Antriebspulen können aber auch über einen in der jeweiligen Antriebsspule induzierten Spulenkurzschlussstrom erkannt werden. Dieser induzierte Spulenkurzschlussstrom lässt auf eine magnetische Kopplung mit einer Transporteinheit schließen.

Natürlich können je nach Wunsch auch weitere Antriebsspulen in den geregelten Kurzschlussmodus geschaltet werden, beispielsweise eine bestimmte Anzahl an Antriebsspulen, die sich in Bewegungsrichtung vor der Transporteinheit befinden, etc.

Die Dauer des Bremsvorgangs ist, neben der Wahl des ersten bzw. zweiten Zeitabschnitts, von der Masse der Transporteinheit, wie auch von an die Transporteinheit gebundene zusätzliche Massen (Transportgut, Werkstück,...) und/oder der Geschwindigkeit der Transporteinheit abhängig. Die Energie, die während des Bremsvorgangs frei wird, wird vorwiegend in den Wicklungswiderständen (Kupferverluste) und im Eisen (vorwiegend Wirbelstromverluste) in Wärme umgesetzt.

Ein Kurzschluss kann für unterschiedliche Ausgestaltung einer LLM-Steuereinheit unterschiedliche Schalterstellungen bedeuten. Weist die LLM-Steuereinheit Vollbrücken, wie in der US 2006/0220623 A1, mit jeweils vier Schaltern pro Antriebspule auf, so kann während des geregelten Kurzschlusses in der Kurzschlussphase, bzw. dem Kurzschlussintervall ein satter Kurzschluss geschaltet werden. Weist die LLM-Steuereinheit jedoch Halbbrücken, umfassend einen oberen und einen unteren Schalter pro Antriebsspule, auf (siehe AT 518 721 A1), so wird in der Kurzschlussphase, bzw. dem Kurzschlussintervall der Kurzschluss moduliert. Das bedeutet dass der obere Schalter der Halbbrücke abwechselnd mit dem unteren Schalter der Halbbrücke durchgeschaltet wird, vorzugsweise in einem Verhältnis von 50/50. Dabei dürfen jedoch der obere Schalter und der untere Schalter nicht gleichzeitig durchgeschaltet sein.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 einen Langstatorlinearmotoraufbau,

Fig.2a eine Vollbrücke zur Ansteuerung einer Antriebsspule,

Fig.2b eine Halbbrücke zur Ansteuerung einer Antriebsspule,

Fig.3 einen zeitlichen Verlauf des momentbildenden Kurschlussstromes, des feldbildenden Kurzschlussstromes und des Kurzschlussstroms, von mehreren überdecken Spulen zusammengefasst.

Fig.4 eine Approximation der Bremskraft als Funktion des Kurzschlussstroms,

Fig.5 ein typisches Schaltmuster für das Kurzschlussintervall und das Leerlaufintervall,

Fig.6a und b Verläufe des Kurzschlussintervalls über den Kurzschlussstrom und die Fehlerabweichung

Fig.7 einen zeitlichen Verlauf eines ersten und zweiten Kurschlussstromes mehrerer Spulen und einer ersten und zweiten erzeugten Bremskraft.

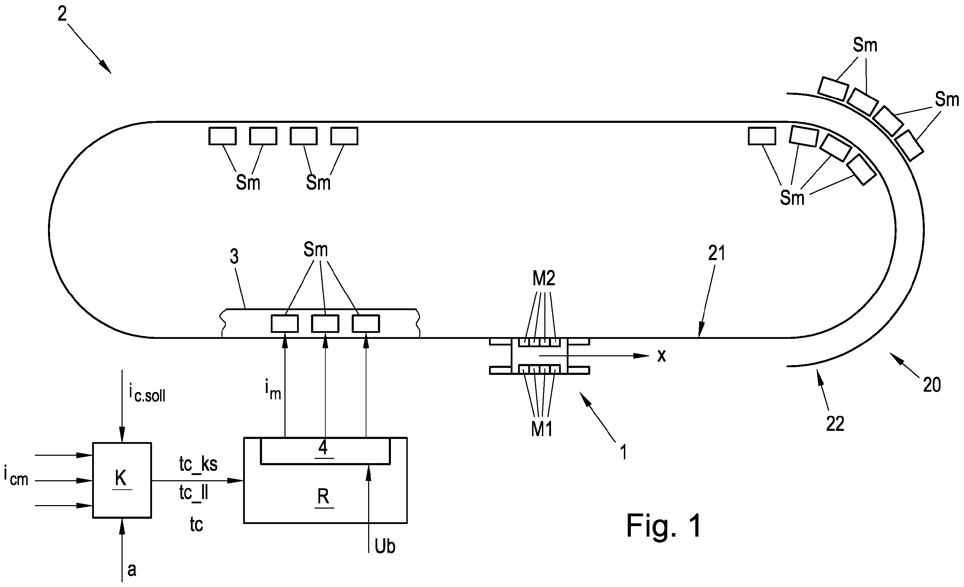

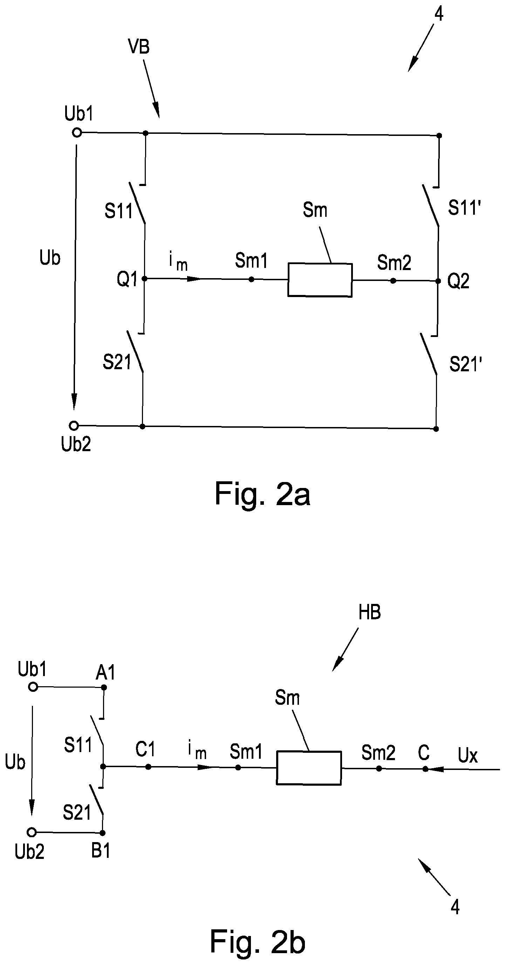

Fig.1 stellt ein einfaches Beispiel eines Langstatorlinearmotors 2 dar. Der Langstatorlinearmotor 2 ist dabei als geschlossene Transportstrecke 20 ausgeführt. Auf der Transportstrecke 20 sind eine Vielzahl m von Antriebsspulen Sm in Bewegungsrichtung x einer Transporteinheit 1 hintereinander angeordnet, die im Normalbetrieb unter Kontrolle einer Spulenregelung R (nur für einige Antriebsspulen Sm dargestellt) jeweils mit einem Spulenstrom $i_m$ bestromt werden, um ein bewegtes Magnetfeld zu erzeugen. Es ist zudem eine LLM-Steuereinheit 4 vorgesehen, die hier integraler Bestandteil der Spulenregelung R ist. Die mit $i_m$ gekennzeichneten Pfeile sind dabei natürlich nur schematisch zu sehen. Es können die Antriebsspulen Sm auch auf andere Weise mit der Steuereinheit verbunden sein um die Antriebsspulen Sm mit dem Spulenstrom $i_m$ zu bestromen, wie weiter unten anhand der Fig. 2a, 2b beispielhaft dargestellt. Sowohl die Spulenregelung R als auch die LLM-Steuereinheit 4 kann als geeignete Hardware (auch dieselbe) und/oder als auf einer geeigneten Hardware laufenden Software ausgeführt sein. Die LLM-Steuereinheit 4 weist pro Antriebsspule Sm Vollbrücken VB (bestehend aus vier Schaltern) oder Halbbrücken HB (bestehend aus zwei Schaltern) auf und kann auch aus mehreren Untereinheiten bestehen, die auch direkt an den Antriebsspulen Sm angeordnet sein können. Durch die Schalterstellungen der Schalter der Vollbrücken VB bzw. Halbbrücken HB der LLM-Steuereinheit 4 werden die Antriebsspulen Sm im Normalbetrieb mit dem Spulenstrom $i_m$ versorgt oder vom Spulenstrom $i_m$ getrennt.

Die in Bewegungsrichtung x nebeneinander angeordneten Antriebsspulen Sm sind an einer ortsfesten Haltekonstruktion 3 (in Fig.1 nur angedeutet) an der Transportstrecke 20 angeordnet. Die Transporteinheiten 1 werden entlang der Transportstrecke 20 in einer Bewegungsrichtung x bewegt, und sind dazu jeweils auf geeignete Weise an der stationär angeordneten Transportstrecke 20 geführt und gehalten.

Eine Transporteinheit 1 weist entlang der Bewegungsrichtung x seitlich angeordnete erste Magnete M1 auf und kann wie in Fig. 1 dargestellt zudem seitlich angeordnete Magnete M2 aufweisen, die sich in einer Querrichtung quer zur Bewegungsrichtung x gegenüber den ersten Magneten M1 befinden können. Weist die Transporteinheit 1 an zwei Seiten jeweils erste Magnete M1 bzw. zweite Magnete M2 auf, so können passend dazu an beiden Seiten der Transportstrecke 20 (in Bewegungsrichtung x gesehen) jeweils Antriebsspulen Sm vorgesehen sein, die mit den jeweiligen Magneten M1, M2 zusammenwirken um eine Bewegung der Transporteinheiten 1 zu verursachen. Zur Bewegung werden vorzugsweise nur die Antriebsspulen Sm im Bereich der Magnete M1, M2 von der Spulenregelung R mit Strom versorgt, wobei dieser Bereich auch Antriebspulen Sm umfassen kann, die sich vor und/oder nach der Transporteinheit 1 befinden. Selbstverständlich können entlang der Transportstrecke 20 auch mehr als eine Transporteinheit 1 bewegt werden, wobei jede Transporteinheit 1 durch entsprechendes Bestromen der Antriebsspulen Sm im Bereich der Transporteinheit 1 unabhängig von den anderen Transporteinheiten 1 (in Richtung, Position, Geschwindigkeit und Beschleunigung) bewegt werden kann. Um die Position der Transporteinheit 1 am Stator und damit die aktuell zu bestromenden Spulen Sm, die sich entlang der Transportstrecke bei der Transporteinheit 1 befinden. zu bestimmen, können beispielsweise Stromsensoren vorgesehen sein.

Die Transportstrecke 20 kann dabei, je nach Anwendung und Bedarf, beliebig geformt sein und kann geschlossene und/oder offene Streckenabschnitte umfassen. Die Transportstrecke 20 muss nicht in einer Ebene liegen, sondern kann auch beliebig im Raum geführt sein. Üblicherweise besteht eine Transportstrecke 20 aus mehreren zusammengesetzten Transportsegmenten mit jeweils einer Anzahl von Antriebsspulen Sm. Gleichfalls sind auch Weichen bekannt, um eine Transporteinheit 1 von einer ersten Transportstrecke 20 auf eine zweite Transportstrecke 20 zu führen. Die für die Bewegung der Transporteinheit 1 benötigte Vortriebskraft wird bekanntermaßen von der vortriebskraftbildenden Stromkomponente iq (q-Komponente) eines Statorstromes $i_A$ gebildet. Der Statorstrom $i_A$ ist ein Stromvektor mit einer q- und einer d-Komponente (normalkraftbildende Stromkomponente) und entspricht dem vektoriellen Summenstrom aller Spulenströme $i_m$ der auf die Transporteinheit 1 wirkenden Antriebsspulen Sm. Für die normale Vorwärtsbewegung der Transporteinheit 1 reicht somit die vortriebskraftbildende Stromkomponente iq (q-Komponente) aus. Die nicht der Vorwärtsbewegung dienende Normalkraft wird von der normalkraftbildenden Stromkompente id (d-Komponente) des Statorstroms $i_A$ gebildet. In einem Langstatorlinearmotor wirken meist mehrere Antriebsspulen Sm gleichzeitig auf die Transporteinheit 1 um eine Bewegung in der Bewegungsrichtung x zu erzielen. Wenn keine d-Komponenten vorhanden sind, entspricht die vortriebskraftbildende Stromkomponente iq dem vektorieller Summenstrom aller Spulenströme $i_m$ der auf die Transporteinheit 1 wirkenden Antriebsspulen Sm. Die im Spulenregler R berechnete vortriebskraftbildende Stromkomponente iq muss daher noch auf die tatsächlich wirkenden Spulenströme $i_m$ der Antriebsspulen Sm umgerechnet und aufgeteilt und daran angelegt werden, was hinlänglich bekannt ist. Das grundlegende Funktionsprinzip eines Langstatorlinearmotors 2 ist hinlänglich bekannt, sodass hier nicht weiter darauf eingegangen wird.

Im Rahmen eines Bremsvorgangs kann eine Transporteinheit 1 abgebremst werden, indem entsprechende Antriebsspulen Sm, z.B. die mit der Transporteinheit 1 zusammenwirkenden, oder alle Antriebsspulen Sm, oder beispielsweise in Bewegungsrichtung angeordnete Antriebsspulen Sm, etc., kurzgeschlossen werden. Hierzu werden beispielsweise die Schalter der Vollbrücken VB/Halbbrücken HB von der LLM-Steuereinheit 4 in die geeignete Stellung gebracht, was durch einen Kurzschlussregler K initiiert werden kann. Der Kurzschluss kann aber natürlich noch auf andere Weise erzeugt werden, beispielsweise durch einen Schalter parallel zu den Antriebsspulen Sm. "Kurzgeschlossen" kann bei Verwendung von Vollbrücken in der LLM-Steuerung 4 einen satten Kurzschluss bedeuten.

Fig.2a zeigt eine Vollbrücke VB zum Bestromen einer Antriebsspule Sm mit einem Spulenstrom $i_m$. Die Antriebsspule Sm weist einen ersten Spulenanschluss Sm1 und einen zweiten Spulenanschluss Sm2 auf. Die Vollbrücke VB besteht aus zwei Hauptzweigen, wobei der erste Hauptzweig aus zwei Schaltern S11, S21 besteht, die in Serie an einer Betriebsspannung Ub liegen, welche durch die Differenz aus einem ersten Betriebspotential Ub1 und einem zweiten Betriebspotential Ub2 an den Eingangsanschlüssen der Vollbrücke VB gebildet wird. Auch der zweite Hauptzweig besteht aus zwei Schaltern S11', S21', die in Serie an der Betriebsspannung Ub liegen. Zwischen dem Verbindungspunkt des ersten Schalters S11 und des zweiten Schalters S21 des ersten Hauptzweiges befindet sich der erste Queranschluss Q1 für einen Querzweig. Äquivalent befindet sich zwischen dem Verbindungspunkt des ersten Schalters S11' und des zweiten Schalters S21' des zweiten Hauptzweiges der zweite Queranschluss Q2 des Querzweigs. Der erste Spulenanschluss Sm1 der Antriebsspule Sm ist mit dem ersten Queranschluss Q1 verbunden, der zweite Spulenanschluss Sm2 der Antriebsspule Sm ist mit dem zweiten Queranschluss Q2 verbunden. Durch geeignetes Ansteuern der Schalter S11, S21, S11', S21' durch die LLM-Steuerung 4 (hier nicht eingezeichnet) kann zwischen erstem Spulenanschluss Sm1 und zweitem Spulenanschluss Sm2 das gleiche elektrische Potential anliegt, während der Spulenstrom $i_m$ fließt. Bei einem satten Kurzschluss werden somit die Schalter S11 und S11' durchgeschaltet (bei offenen Schaltern S21 und S21') oder die Schalter S21, S21' durchgeschaltet (bei offenen Schaltern S11, S11').

Es können von der LLM-Steuerung 4 auch Halbbrücken HB angesteuert werden um die Antriebsspulen Sm mit einem Spulenstrom $i_m$ zu bestromen, beispielsweise wie in Fig. 2b dargestellt. Es wird dabei auf den zweiten Hauptzweig der Vollbrücke VB verzichtet, womit die Betriebsspannung Ub nur am ersten Hauptzweig, zwischen dem ersten Eingangsanschluss A1 und zweitem Eingangsanschluss B1 und dem dazwischen in Serie geschalteten ersten Schaltern S11 und zweiten Schalter S21 anliegt. Der Verbindungspunkt zwischen erstem S11 und zweitem Schalter S21 wird als Mittelpunkt C1 bezeichnet und ist mit dem ersten Anschluss Sm1 der Antriebsspule Sm verbunden. Der zweite Anschluss L12 der Antriebsspule Sm liegt auf einem, z.B. von einer Potentialregelungseinheit vorgegebenen, elektrischen Potential Ux an einem Regelungspunkt C. Üblicherweise sind die zweiten Anschlüsse Sm2 aller (hier nicht eingezeichneten) Antriebsspulen Sm mit dem Regelungspunkt C verbunden und werden auf das elektrische Potential Ux geregelt, das üblicherweise der halben Betriebsspannung Ub entspricht.

Ein direkter Kurzschluss der Antriebsspule Sm durch die beiden Schalter S11 und S12 ist bei Verwendung einer Halbbrücke HB nicht möglich, da die Schalter S11 und S21 nie gleichzeitig geschlossen sein dürfen. Um die Betriebsspannung Ub nicht kurzzuschließen ist bei Verwendung von Halbbrücken HB somit ein "PWM-Kurzschluss" vorgesehen. Ein PWM-Kurzschluss bedeutet, dass jeweils der obere Schalter S11 und der unteren Schalter S21 einer Halbbrücke HB abwechselnd geschaltet werden, beispielsweise mittels einer 50/50-Taktung über Periodendauer T. Damit herrscht an beiden Anschlüssen Sm1, Sm2 der Antriebsspule Sm das gleiche Potential Ux - analog zur in Fig. 2a dargestellten Vollbrücke VB, bei welcher sich bei einem satten Kurzschluss beide Spulenanschlüsse Sm1, Sm2 entweder auf dem ersten Betriebspotential Ub1 oder dem zweiten Betriebspotential Ub2 befinden. Beim Wechsel der geschlossenen/geöffneten Schalter einer Halbbrücke HB kann eine minimale Schutzzeit eingehalten werden um eventuell vorhandene Restladungen auszuräumen.

Ein PWM-Kurzschluss entspricht zu keinem Zeitpunkt einem satten Kurzschluss, kann jedoch über ein zeitliches Integral der Spulenspannung über einen Schaltzyklus als Kurzschluss interpretiert werden. Dabei werden die betreffenden Antriebsspulen Sm natürlich nicht mehr von der Regelungseinheit R mit dem Spulenstrom $i_m$ versorgt. Es entsteht in den mit der Transporteinheit 1 gekoppelten Antriebsspulen Sm jedoch aufgrund der weiteren Bewegung in Bewegungsrichtung x jeweils ein Spulenkurzschlussstrom icm aufgrund einer durch eine EMK (Elektro-Magnetischen-Kraft) induzierten Spannung.

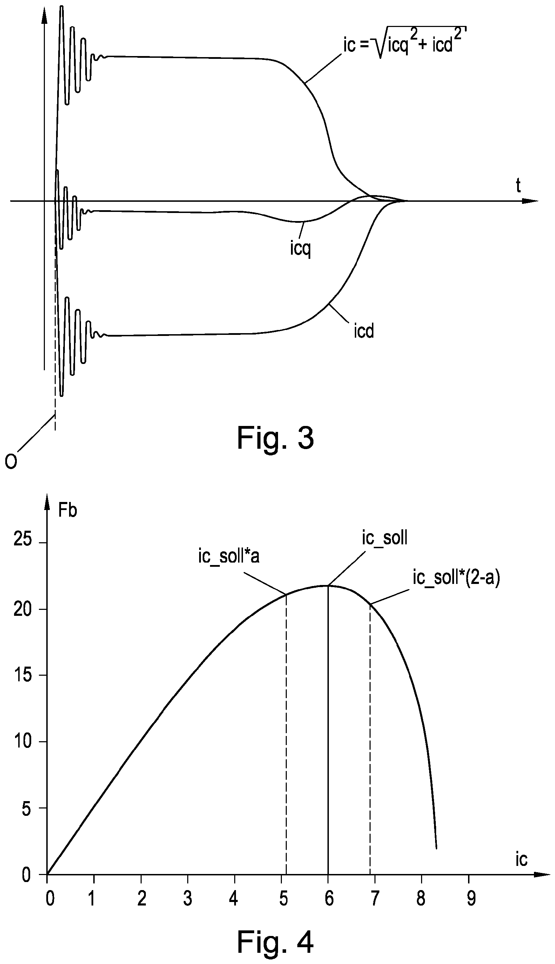

Da der Statorstrom $i_A$ (im dq-Koordinatensystem) dem vektoriellen Summenstrom aller Spulenströme $i_m$ entspricht, ergibt sich auch der Kurzschlussstrom ic (im dq-Koordinatensystem) als vektorielle Summe der Spulenkurzschlussströme icm. Fig. 3 zeigt den zeitlichen Verlauf eines Kurzschlussstromes ic bei einem dauerhaften Kurzschluss während eines Bremsvorgangs. Es ist ersichtlich, dass der Kurzschlussstrom ic ab dem Bremszeitpunkt O anfangs einen klassischen Verlauf eines Kurzschlussstroms ic eines Stators mit Schwingverhalten aufweist. So tritt nach einem subtransienten Verlauf ein transienter Verlauf ein, woraufhin schließlich ein annähernd konstanter Verlauf folgt, welcher wiederum schlussendlich abfällt und gegen Null strebt. Dieser Abfall wird dadurch hervorgerufen, dass die treibende Elektro-Magnetische-Kraft (EMK) verringert wird, da die Geschwindigkeit der Transporteinheit 1 zu diesem Zeitpunkt bereits gering ist.

Ebenso abgebildet sind in Fig. 3 der Verlauf der vortriebskraftbildenden Kurzschlussstromkomponente icq und der feldbildende, d.h. in Feldrichtung zeigende, Kurzschlussstromkomponente icd, des Kurzschlussstroms ic. Die vortriebskraftbildende Kurzschlussstromkomponente icq ist dabei in gleicher Weise für die Bremsung der Transporteinheit 1 verantwortlich, wie es die vortriebskraftbildende Stromkomponente iq im Normalbetrieb für die Bewegung der Transporteinheit 1 in Bewegungsrichtung x ist. Daher ist es wünschenswert die vortriebskraftbildende Kurzschlussstromkomponente icq während eines geregelten Kurzschlussmodus M zusätzlich zu vergrößern, bzw. zu maximieren. Diese Vergrößerung der vortriebskraftbildenden Kurzschlussstromkomponente icq erfolgt durch geeignete Wahl der Kurzschluss- und Leerlaufphasen.

Es kann eine Abschätzung des Zusammenhangs zwischen vortriebskraftbildender Stromkomponente iq als Funktion des gesamten Kurzschlussstromes ic gebildet werden, ohne eine zusätzliche Information bezüglich der Position bzw. Winkel zu benötigen. Hierzu wird von für eine mehrphasige Anspeisung gebildeten Ständerspannungsgleichungen ausgegangen. Es werden die Ständergleichungen nach der Geschwindigkeit aufgelöst und der stationäre Fall (d.h. keine Änderungen über die Zeit, was wiederum eine Geschwindigkeit von Null bedeutet) angenommen. Unter Berücksichtigung des Zusammenhangs $$ic = \sqrt{icq^2 + icd^2}$$ werden die

$$iq = ic\sqrt{1 - ic^2 \left(\frac{L}{\Psi}\right)^2}$$

Ständergleichungen nach $\qquad$ aufgelöst. Der Fluss des Permanentmagneten $\Psi$ kann näherungsweise als konstant angenommen werden. Der dadurch ermittelte Zusammenhang wird in die Kraftgleichung einsetzt, woraufhin die Kraftgleichung nach dem Kurzschlussstrom ic abgeleitet wird. Ein Nullsetzen der abgeleiteten Kraftgleichung entspricht einem optimalen Zusammenhang von vortriebskraftbildender Stromkomponente iq zum gesamten Kurzschlussstrom ic, d.h. einer Maximierung der vortriebskraftbildenden Stromkomponente iq. Daraus kann die Beziehung f für den optimalen Soll-Kurzschlussstrom ic_soll abgeleitet werden:

$$ic\_soll = \frac{1}{\sqrt{2}} \frac{\Psi}{L}.$$

Der optimale Soll-Kurzschlussstrom ic_soll mit einer maximalen vortriebskraftbildenden Kurzschlussstromkomponente icq kann somit ausgehend von den Ständerspannungsgleichungen nach der Beziehung f:

$$ic\_soll = \frac{1}{\sqrt{2}} \frac{\Psi}{L}$$

ermittelt werden.

Die entsprechenden Werte für die Induktivität L und den Fluss $\Psi$, können beispielsweise durch Versuche bestimmt werden.

In Fig. 4 ist der approximierte Zusammenhang der Bremskraft Fb als Funktion des Kurschlussstromes ic für eine gewisse Geschwindigkeit der Transporteinheit 1 dargestellt, wobei auf der Abszisse der Kurzschlussstrom ic aufgetragen ist und auf der Ordinate die wirkende Bremskraft Fb. Der optimale Soll-Kurzschlussstrom ic_soll ist ebenso eingezeichnet und stellt den Kurzschlussstrom ic dar, der eine maximale Bremskraft Fb ergibt, da die vortriebskraftbildende Kurzschlussstromkomponente icq maximiert ist.

Um zu Beginn eines Bremsvorgangs, aber auch in jedem Zyklus nach dem Start des Bremsvorgangs den Ist-Kurzschlussstrom ic zu bestimmen, können alle Antriebspulen Sm, die Antriebspulen Sm eines Segments, oder nur die mit der Transporteinheit 1 gekoppelten Antriebsspulen Sm (sofern bekannt) für einen kurzen Zeitraum kurzgeschlossen werden. Der Kurzschlussstrom ic kann als vektorielle Summe der Spulenkurzschussströme icm, die gemessen werden, berechnet werden.

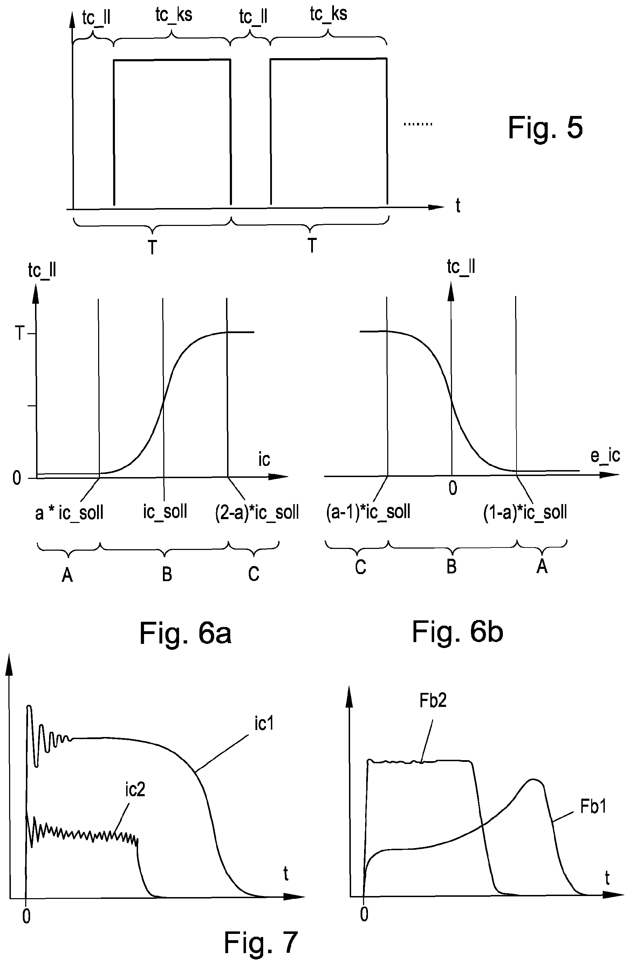

Fig. 5 zeigt eine typische Periode T, in welcher sich Kurzschlussintervall tc_ks und Leerlaufintervall tc_ll abwechseln. Die Periode T ist hier beispelhaft als konstant angenommen, kann aber natürlich auch variieren.

Bei Verwendung einer Vollbrücke VB (vgl. Fig 2a) sind die Schalter S11, S21, S11', S21' im Leerlaufintervall tc_ll geöffnet und im Kurzschlussintervall tc_ks für einen satten Kurzschluss die Schalter S21 und S21' oder die Schalter S11 und S11' durchgeschaltet. Im Leerlaufintervall tc_ll sind alle vier Schalter S11, S21', S11', S21 der Vollbrücke VB geöffnet. Bei Verwendung einer Halbbrücke HB (vgl. Fig. 2b) sind die Schalter S11 und S21 im Leerlaufintervall tc_ll geöffnet und im Kurzschlussintervall tc_ks jeweils abwechselnd, z.B. in einem 50/50-Verhältnis, geschlossen.

Als Grenzfälle wäre ein Kurzschlussintervall tc_ll von Null (d.h. ein Leerlaufintervall tc_ll in der Höhe der Periode T) oder ein Kurzschlussintervall tc_ll in der Höhe der Periode T (und damit ein Leerlaufintervall tc_ll von Null) vorstellbar. Das Kurzschlussintervall tc_ll sollte jedoch insbesondere bei einem PWM-Kurzschluss einer Halbbrücke HB vorteilhafterweise nicht bei Null liegen, sondern knapp darüber, vorzugsweise bei der minimalen Schutzzeit.

Die Wahl des richtigen Verhältnisses von Kurzschlussintervall tc_ks zu Leerlaufintervall tc_ll kann mittels des Kurzschlussreglers K durchgeführt werden, welcher der Regelungseinheit R vorgeschaltet sein kann (wie in Fig.1 angedeutet), oder integraler Bestandteil der Reglungseinheit R sein kann.

Vorteilhafterweise werden im geregelten Kurzschlussmodus M drei Phasen A, B, C vorgesehen. In einer Kurzschlussphase A, in welcher der Kurzschlussstrom ic kleiner als der Soll-Kurzschlussstrom ic_soll multipliziert mit einem Faktor a ist, $ic < ic\_soll \cdot a$, wird der zumindest eine Teil der Antriebspulen Sm, die mit einer Transporteinheit 1 zusammenwirken, über jede Periodendauer T, d.h. dauerhaft, im Kurzschluss betrieben, da der Ist-Kurzschlussstrom ic kleiner dem Soll-Kurzschlussstrom ic_soll ist. Dies kann bei Verwendung von Vollbrücken VB in der LLM-Steuerung 4 einen satten Kurzschluss, oder bei Verwendung von Halbbrücken HB in der LLM-Steuerung 4 einen "PWM-Kurzschluss" bedeuten. Das bedeutet, dass in der Kurzschlussphase A innerhalb jeder Periodendauer T das Kurzschlussintervall tc_ks maximiert wird und das Leerlaufintervall ic_ll minimiert wird. Dabei kann sich das Kurzschlussintervall tc_ks über die gesamte Periodendauer T erstrecken, womit das Leerlaufintervall tc_ll Null ist. Es kann grundlegend für die Kurzschlussphase A eine minimale Dauer für die Leerlaufphase tc_ll (d.h. eine maximale Dauer für die Kurzschlussphase tc_ks) vorgesehen sein, welche einer vordefinierten minimalen Schutzzeit entsprechen kann. Beispielsweise kann für den eine Periodendauer T von 25μs die minimale Dauer der Leerlaufphase tc_ll einer vordefinierten minimalen Schutzzeit, beispielsweise 500ns, entsprechen.

In einer Mischphase B, in welcher der Kurzschlussstrom ic dem Soll-Kurzschlussstrom ic_soll multipliziert mit einem Faktor a entspricht oder überschreitet, $ic \geq ic\_soll \cdot a$, und vorteilhafterweise kleiner dem Soll-Kurzschlussstrom ic_soll multipliziert mit (2-a) ist: $ic < ic\_soll \cdot (2-a)$, wird der zumindest eine Teil der Antriebspulen Sm abwechselnd im Kurzschluss und im Leerlauf betrieben. Das bedeutet, dass sich in einer Periode T Kurzschlussintervall tc_ks und Leerlaufintervall tc_ll abwechseln. Insbesondere kann die jeweilige Dauer von Kurzschlussintervall tc_ks und Leerlaufintervall tc_ll innerhalb einer Periode T für die Mischphase B über ein Polynom dritter Ordnung mit einer Fehlerabweichung e_ic berechnet werden. Die Fehlerabweichung e_ic stellt die Abweichung des Kurzschlussstroms ic vom Soll-Kurzschlussstrom ic_soll dar.

In einer Leerlaufphase C, in welcher der Kurzschlussstrom ic dem Soll-Kurzschlussstrom ic_soll multipliziert mit dem Term (2 - a) entspricht oder überschreitet $ic \geq ic\text{-}soll \cdot (2 - a)$ wird der zumindest eine Teil der Antriebspulen Sm im Leerlauf betrieben. Es wird durch den Kurzschlussregler K das Leerlaufintervall tc_ll maximiert und das Kurzschlussintervall tc_ks minimiert. Dabei kann sich das Leerlaufintervall tc_ll über die gesamte Periodendauer T erstrecken, womit das Kurzschlussintervall tc_ks Null ist. Es kann jedoch auch ein minimales Kurzschlussintervall tc_ks größer Null bzw. ein maximales Leerlaufintervall tc_ll kleiner der Periodendauer T vorgesehen sein. Wird beispielsweise ein Faktor a von Null gewählt, so findet ausschließlich die Mischphase B Anwendung.

Wird beispielsweise ein Faktor a von Eins gewählt, so erfolgt der Betrieb in der Kurzschlussphase A, wenn der Kurzschlussstrom ic kleiner als der Soll-Kurzschlussstrom ic_soll und die Leerlaufphase C, wenn der Kurzschlussstrom ic gleich oder größer als der Soll-Kurzschlussstrom ic_soll ist. In diesem Spezialfall gibt es dementsprechend keine Mischphase B.

Der Faktor a kann vorab bestimmt oder vorgegeben werden, wobei sich ein Faktor von a=0,85 für eine Kurzschlussstromregelung eines Langstatorlinearmotors als besonders vorteilhaft erwiesen hat. Die Grenze von Leerlaufphase A zu Mischphase B ist für einen Faktor a=0,85 strichliert in Fig. 4 eingezeichnet, ebenso die Grenze von Mischphase B zu Kurzschlussphase C.

Vorteilhafterweise wird in der Mischphase B der zumindest eine Teil der Antriebspulen Sm jeweils abwechselnd über ein Kurzschlussintervall tc_ks im Kurzschluss betrieben und über ein Leerlaufintervall tc_ll im Leerlauf betrieben, wobei die Dauer des Kurzschlussintervalls tc_ks zur Dauer des Leerlaufintervalls tc_ll bestimmt wird.

In Fig. 6a ist ein Verlauf des Kurzschlussstroms ic über die Leerlaufphase tc_ll dargestellt, wobei von der Kurzschlussphase A über die Mischphase B in die Leerlaufphase C geschaltet wird. Hier ist das Leerlaufintervall tc_ll selbst in der Kurzschlussphase A nicht ganz Null, da eine minimale Dauer für die Leerlaufphase tc_ll vorgesehen ist. In Fig.6b ist ein Verlauf der Fehlerabweichung e_ über die Leerlaufphase tc_ll von der Leerlaufphase C über die zweite Phase B in die erste Kurzschlussphase A dargestellt. Da für die Berechnung des Leerlaufintervalls tc_ll und des Kurzschlussintervalls tc_ks in der Mischphase B für die Fehlerabweichung e_ic ein Polynom dritter Ordnung verwendet wird, können für den Kurzschlussstrom ic weiche Übergänge in die und aus der Mischphase B erreicht werden, womit ein Rauschen des Kurzschlussstromes ic gering gehalten werden kann. Es wäre alternativ auch möglich keine Mischphase B vorzusehen und hart von der Kurzschlussphase A in die Leerlaufphase C oder umgekehrt zu schalten.

In Fig. 7 ist der zeitliche Verlauf eines ersten Kurschlussstromes ic1 für einen permanenten, bzw. 50/50-PWM-Kurzschluss und einem zweiten Kurzschlussstrom ic2, welcher erfindungsgemäß erzeugt wird, dargestellt. Für den ersten Kurzschlussstrom ic1 eine maximale Kurzschlussphase tc_ks gewählt, d.h. eine dauerhafte Phase A. Im unteren Teil der Fig. 7 ist ein zeitlicher Verlauf einer ersten Bremskraft Fb1, welche aus dem ersten Kurzschlussstrom ic1 resultiert und ein zeitlichen Verlauf einer zweiten Bremskraft Fb2, welche aus dem zweiten Kurzschlussstrom ic2 resultiert. Es ist ersichtlich, dass die zweite Bremskraft Fb2 insbesondere direkt nach Start des Bremsvorgangs höher als die erste Bremskraft Fb1 ist, obwohl der zweite Kurzschlussstrom ic2 geringer als der erste Kurzschlussstrom ic1 ist, was aus einer erfindungsgemäß erhöhten vortriebskraftbildenden Kurzschlussstromkomponente icq resultiert. Zudem ist das Schwingungsverhalten des zweiten Kurzschlussstroms ic2 verbessert.

Die Auswahl der Antriebspulen Sm, welche gemäß des geregelten Kurzschlussmodus M angesteuert werden, kann grundlegend frei erfolgen. So können alle Antriebsspulen Sn oder ein Teil der Antriebsspulen Sn in den geregelten Kurzschlussmodus M geschaltet werden. Es können vorteilhafterweise die mit der Transporteinheit T1 magnetisch gekoppelten Antriebspulen Sm in den geregelten Kurzschlussmodus M geschaltet werden.

Welche Antriebsspulen Sm mit der Transporteinheit 1 gekoppelt sind, kann über die aktuelle Position der Transporteinheit 1 bestimmt werden. Diese Positionserkennung kann mittels geeigneter Positionssensoren erfolgen, welche bereits am Langstatorlinearmotor vorgesehen sein können, beispielsweise wie in der AT 519 238 A1 beschrieben.

Es kann aber auch erkannt werden, welche Antriebsspulen Sm im kurzgeschlossenen Zustand einen Spulenkurzschlussstrom icm (der gemessen wird) führen. Daraus kann darauf geschlossen werden, welche der Antriebspulen Sm mit der Transporteinheit 1 magnetisch gekoppelt sind.

Wird erkannt, dass sich während des Bremsvorgangs die Transporteinheit 1 derart weiter bewegt, dass eine weitere, in Bewegungsrichtung x liegende, Antriebspule Sm mit der Transporteinheit 1 gekoppelt ist (z.B. da ein Spulenkurzschlussstrom icm induziert wird), so kann diese Antriebspule Sm ebenso in den Kurzschlussmodus M geschaltet werden. Das hat in der Regel zur Folge, dass eine Antriebspule Sm entgegen der Bewegungsrichtung x nicht mehr mit der Transporteinheit 1 gekoppelt ist, womit diese nicht mehr in Kurzschlussmodus M verbleiben muss. Dass die Antriebspule Sm entgegen der Bewegungsrichtung x nicht mehr mit der Transporteinheit 1 gekoppelt ist, kann jedoch ebenso über Positionssensoren oder Nicht-Induzierung eines Spulenkurzschlussstroms icm erkannt werden. Es kann erkannt werden, dass die letzte entgegen der Bewegungsrichtung x gekoppelte Antriebspule Sm nicht mehr mit der Transporteinheit 1 gekoppelt ist, womit darauf geschlossen werden kann, dass die nächste in Bewegungsrichtung x befindliche Spule Sm statt erstgenannter Antriebsspule Sm im Kurzschlussmodus M betrieben wird.

Vorteilhafterweise kann durch den Kurzschlussregler K der Kurzschlussstrom ic, beispielsweise auf einen Schwellwert icmax, begrenzt werden. Dies kann erfolgen, indem vom Kurzschluss in den Leerlauf geschaltet wird. So ist es möglich den (mittleren) Kurzschlussstrom ic zu regeln - solange genug kinetische Energie in der Transporteinheit 1 vorhanden ist.

**Patentansprüche**

1. Verfahren zum Ansteuern einer Mehrzahl (m) Antriebspulen (Sm) eines Langstatorlinearmotors (1), wobei die Antriebspulen (Sm) in einem Normalbetrieb derart bestromt werden, dass ein mit einer Transporteinheit (2) gekoppeltes Magnetfeld entlang einer Bewegungsrichtung (x) bewegt wird um die Transporteinheit (2) entlang der Bewegungsrichtung (x) zu bewegen, wobei bei einem Bremsvorgang der Transporteinheit (2) in einen geregelten Kurzschlussmodus (M) geschaltet wird, in welchem zumindest ein Teil der Antriebspulen (Sm) zumindest über einen ersten Zeitabschnitt in einem Kurzschluss betrieben wird **dadurch gekennzeichnet, dass** im geregelten Kurzschlussmodus (M) der zumindest eine Teil der Antriebspulen (Sm) zumindest über einen zweiten Zeitabschnitt in einem Leerlauf betrieben wird.

2. Verfahren nach Anspruch 1, **dadurch gekennzeichnet, dass** ein gesamter durch die Antriebspulen (Sm) fließender Kurzschlussstrom (ic) ermittelt wird, **dass** ein Soll-Kurzschlussstrom (ic_soll) mit einer maximalen vortriebskraftbildende Kurzschlussstromkomponente (icq) mittels einer vorgegebenen Beziehung (f) ermittelt wird, **dass** im geregelten Kurzschlussmodus (M)

　　- in einer Kurzschlussphase (A), in welcher der Kurzschlussstrom (ic) kleiner als der Soll-Kurzschlussstrom (ic_soll) ist, der zumindest eine Teil der Antriebspulen (Sm) im Kurzschluss betrieben wird,
　　- in einer Leerlaufphase (C), in welcher der Kurzschlussstrom (ic) den Soll-Kurzschlussstrom (ic_soll) erreicht oder überschreitet, der zumindest eine Teil der Antriebsspulen (Sm) im Leerlauf betrieben wird.

3. Verfahren nach Anspruch 1, **dadurch gekenn-**

**zeichnet, dass** ein gesamter durch die Antriebspulen (Sm) fließender Kurzschlussstrom (ic) ermittelt wird, **dass** ein Soll-Kurzschlussstrom (ic_soll) mit einer maximalen vortriebskraftbildende Kurzschlussstromkomponente (icq) mittels einer vorgegebenen Beziehung (f) ermittelt wird, **dass** im geregelten Kurzschlussmodus (M)

　　- in einer Kurzschlussphase (A), in welcher der Kurzschlussstrom (ic) kleiner als der Soll-Kurzschlussstrom (ic_soll) multipliziert mit einem Faktor a ist, der zumindest eine Teil der Antriebspulen (Sm) im Kurzschluss betrieben wird,
　　- in einer Zwischenphase (B), in welcher der Kurzschlussstrom (ic) dem Soll-Kurzschlussstrom (ic_soll) multipliziert mit einem Faktor a entspricht oder überschreitet und kleiner dem Soll-Kurzschlussstrom (ic_soll) multipliziert mit einem Term 2-a ist, der zumindest eine Teil der Antriebsspulen (Sm) abwechseln im Kurzschluss und im Leerlauf betrieben wird, und
　　- in einer Leerlaufphase (C), in welcher der Kurzschlussstrom (ic) dem Soll-Kurzschlussstrom (ic_soll) multipliziert mit dem Term 2-a entspricht oder überschreitet, der zumindest eine Teil der Antriebsspulen (Sm) im Leerlauf betrieben wird.

4. Verfahren nach Anspruch 3, **dadurch gekennzeichnet, dass** in der Mischphase (B) der zumindest Teil der Antriebspulen (Sm) jeweils abwechselnd über ein Kurzschlussintervall (tc_ks) im Kurzschluss betrieben wird und über ein Leerlaufintervall (tc_ll) im Leerlauf betrieben wird, wobei die Dauer des Kurzschlussintervalls (tc_ks) und die Dauer des Leerlaufintervalls (tc_ll) bestimmt wird.

5. Verfahren nach Anspruch 4, **dadurch gekennzeichnet, dass** in der Mischphase (B) die Dauer des Kurzschlussintervalls (tc_ks) zur Dauer des Leerlaufintervalls (tc_ll) über ein Polynom dritter Ordnung mit einer Fehlerabweichung (e_ic) berechnet wird.

6. Verfahren nach einem der Ansprüche 3 bis 5, **dadurch gekennzeichnet, dass** ein Faktor a von 0,85 gewählt wird.

7. Verfahren nach einem der Ansprüche 2 bis 6, **dadurch gekennzeichnet, dass** die vorgegebene Be-

$$ic\_soll = \frac{1}{\sqrt{2}}\frac{\Psi}{L},$$

ziehung wie folgt lautet: mit ic_soll als Soll-Kurzschlussstrom, Ψ, als Hauptfluss und L als ungesättigte Induktivität.

8. Verfahren nach einem der Ansprüche 1 bis 6, **dadurch gekennzeichnet, dass** nur die mit der Transporteinheit (1) magnetisch gekoppelten Antriebspulen (Sm) in den geregelten Kurzschlussmodus (M) geschaltet werden.

9. Verfahren nach Anspruch 8, **dadurch gekennzeichnet, dass** die mit der Transporteinheit (1) magnetisch gekoppelten Antriebspulen (Sm) mittels eines Positionssensors bestimmt werden.

10. Verfahren nach Anspruch 8, **dadurch gekennzeichnet, dass** die mit der Transporteinheit (1) magnetisch gekoppelten Antriebspulen (Sm) über einen in der jeweiligen Antriebsspule (Sm) induzierten Spulenkurzschlussstrom (icm) erkannt werden.

11. Langstatorlinearmotor (2) mit einer Mehrzahl (m) Antriebspulen (Sm) und zumindest einer Transporteinheit (1), wobei eine über einen Spulenregler (R) gesteuerte LLM-Steuerung (4) vorgesehen ist, die ausgestaltet ist die Antriebspulen (Sm) derart zu bestromen, dass ein mit der Transporteinheit (1) gekoppeltes Magnetfeld entlang einer Bewegungsrichtung (x) bewegt wird um die Transporteinheit (1) entlang der Bewegungsrichtung (x) zu bewegen, **dadurch gekennzeichnet, dass** ein Kurzschlussregler (K) vorgesehen ist, der ausgestaltet ist bei einem Bremsvorgang der Transporteinheit (1) zumindest einen Teil der Antriebspulen (Sm) zumindest über einen ersten Zeitabschnitt kurzschließen und zumindest über einen zweiten Zeitabschnitt in einem Leerlauf zu betreiben.

12. Langstatorlinearmotor (2) nach Anspruch 11 , **dadurch gekennzeichnet, dass** der Kurzschlussregler (K) dem Spulenregler (R) vorgeschaltet ist und ausgestaltet ist bei einem Bremsvorgang den Spulenregler (R) anzuweisen den zumindest einen Teil der Antriebspulen (Sm) zumindest über einen Zeitabschnitt kurzzuschließen.

**Claims**

1. Method for controlling a plurality (m) of drive coils (Sm) of a long-stator linear motor (1), wherein in a normal operation the drive coils (Sm) are energized such that a magnetic field coupled to a transport unit (2) is moved along a direction of motion (x) in order to move the transport unit (2) along the direction of motion (x), wherein during a braking operation, the transport unit (2) is switched to a controlled short-circuit mode (M) in which at least some of the drive coils (Sm) are short-circuited at least over a first time interval, **characterized in that** in the controlled short-circuit mode (M) the at least some of the drive coils (Sm) are operated at idle for at least a second time interval.

2. The method according to claim 1, **characterized in that** a total short-circuit current (ic) flowing through the drive coils (Sm) is determined, **that** a target short-circuit current (ic_soll) with a maximum driving force-forming short-circuit current component (icq) is determined by means of a predetermined relationship (f), **that** in the controlled short-circuit mode (M),

- in a short-circuit phase (A) in which the short-circuit current (ic) is less than the target short-circuit current (ic_soll), the at least some of the drive coils (Sm) are operated short-circuited,
- in an idle phase (C), in which the short-circuit current (ic) reaches or exceeds the target short-circuit current (ic_soll), the at least some of the drive coils (Sm) are operated at idle.

3. The method according to claim 1, **characterized in that** a total short-circuit current (ic) flowing through the drive coils (Sm) is determined, **that** a target short-circuit current (ic_soll) with a maximum driving force-forming short-circuit current component (icq) is determined by means of a predetermined relationship (f), **that** in the controlled short circuit mode (M),

- in a short-circuit phase (A) in which the short-circuit current (ic) is less than the target short-circuit current (ic_soll) multiplied by a factor a, the at least some of the drive coils (Sm) are operated short-circuited,
- in an intermediate phase (B) in which the short-circuit current (ic) is equal to or greater than the target short-circuit current (ic_soll) multiplied by a factor a and is less than the target short-circuit current ic_soll multiplied by a term 2-a, the at least some of the drive coils (Sm) are alternately operated short-circuited and in idle, and
- in an idle phase (C), in which the short-circuit current (ic) corresponds to or exceeds the target short-circuit current (ic_soll) multiplied by the term 2-a, the at least some of the drive coils (Sm) are operated at idle.

4. The method according to claim 3, **characterized in that** in the mixing phase (B) each of the at least some of the drive coils (Sm) is operated alternately short-circuited over a short-circuit interval (tc_ks) and in idle over an idle interval (tc_ll), wherein the duration of the short-circuit interval (tc_ks) and the duration of the idle interval (tc_ll) are determined.

5. The method according to claim 4, **characterized in that** in the mixing phase (B) the duration of the short-circuit interval (tc_ks) to the duration of the idle interval (tc_ll) is calculated via a third order polynomial and an error deviation (e_ic).

6. The method according to any one of claims to 5, **characterized in that** a factor a of 0.85 is selected.

7. The method according to one of claims 2 to 6, **characterized in that** the predetermined relationship is

$$ic\_soll = \frac{1}{\sqrt{2}}\frac{\Psi}{L},$$

as follows: with ic_soll as optimum target short-circuit current, $\Psi$, as main $\Psi$ flux and L as unsaturated inductance.

8. The method according to one of claims 1 to 6, **characterized in that** only the drive coils (Sm) that are magnetically coupled with the transport unit (1) are switched to the controlled short-circuit mode (M).

9. The method according to claim 8, **characterized in that** the drive coils (Sm) that are magnetically coupled to the transport unit (1) are determined by means of a position sensor.

10. The method according to claim 8, **characterized in that** the drive coils (Sm) that are magnetically coupled to the transport unit (1) are detected using a coil short-circuit current (icm) induced in the respective drive coil (Sm).

11. A long-stator linear motor (2) with a plurality (m) of drive coils (Sm) and at least one transport unit (1), wherein a LLM control system (4) which is controlled by a coil controller (R) is designed such that the drive coils (Sm) are energized in a way that a magnetic field coupled to the transport unit (1) is moved along a direction of motion (x) in order to move the transport unit (1) along the direction of motion (x), **characterized in that** a short-circuit controller (K) is provided which is designed to, during a braking operation of the transport unit (1), short-circuit at least some of the drive coils (Sm) at least over a first time interval and to operate the at least some of the drive coils (Sm) at idle for at least a second time interval.

12. The long-stator linear motor (2) according to claim 11, **characterized in that** the short-circuit controller (K) is connected upstream of the coil controller (R) and is designed to, during a braking operation the coil controller (R), instruct the at least some of the drive coils (Sm) to short circuit over at least one time interval.

**Revendications**

1. Procédé de commande d'une pluralité (m) de bobines d'entraînement (Sm) d'un moteur linéaire à stator long (1), les bobines d'entraînement (Sm) étant excitées lors du fonctionnement normal de telle sorte qu'un champ magnétique accouplé à une unité de transport (2) est déplacé le long d'une direction de déplacement (x) afin de déplacer l'unité de transport (2) le long de la direction de déplacement (x), une commutation étant effectuée, lors d'une opération de freinage de l'unité de transport (2), vers un mode de court-circuit régulé (M), dans lequel au moins une partie des bobines d'entraînement (Sm) fonctionne en court-circuit au moins pendant une première période de temps, **caractérisé en ce que,** dans le mode de court-circuit régulé (M), l'au moins une partie des bobines d'entraînement (Sm) fonctionne en marche à vide au moins pendant une seconde période de temps.

2. Procédé selon la revendication 1, **caractérisé en ce qu'**un courant de court-circuit total (ic) traversant les bobines d'entraînement (Sm) est déterminé, **en ce qu'**un courant de court-circuit de consigne (ic_soll), lequel comporte une composante de courant de court-circuit maximale (icq) générant une force de propulsion, est déterminé au moyen d'une relation prédéterminée (f), **en ce que,** dans le mode de court-circuit régulé (M),

   - dans une phase de court-circuit (A) dans laquelle le courant de court-circuit (ic) est inférieur au courant de court-circuit de consigne (ic_soll), l'au moins une partie des bobines d'entraînement (Sm) fonctionne en court-circuit,
   - dans une phase de marche à vide (C) dans laquelle le courant de court-circuit (ic) atteint ou dépasse le courant de court-circuit de consigne (ic_soll), l'au moins une partie des bobines d'entraînement (Sm) fonctionne en marche à vide.

3. Procédé selon la revendication 1, **caractérisé en ce qu'**un courant de court-circuit total (ic) traversant les bobines d'entraînement (Sm) est déterminé, **en ce qu'**un courant de court-circuit de consigne (ic_soll), lequel comporte une composante de courant de court-circuit maximale (icq) générant une force de propulsion, est déterminé au moyen d'une relation prédéterminée (f), **en ce que,** dans le mode de court-circuit régulé (M),

   - dans une phase de court-circuit (A) dans laquelle le courant de court-circuit (ic) est inférieur au courant de court-circuit de consigne (ic_soll) multiplié par un facteur a, l'au moins une partie des bobines d'entraînement (Sm) fonctionne en court-circuit,
   - dans une phase intermédiaire (B) dans laquelle le courant de court-circuit (ic) correspond ou dépasse le courant de court-circuit de consigne (ic_soll) multiplié par un facteur a et est inférieur au courant de court-circuit de consigne (ic_soll) multiplié par un terme 2-a, l'au moins une partie des bobines d'entraînement (Sm) fonctionne alternativement en court-circuit et en marche à vide, et

- dans une phase de marche à vide (C) dans laquelle le courant de court-circuit (ic) correspond ou dépasse le courant de court-circuit de consigne (ic_soll) multiplié par le terme 2-a, l'au moins une partie des bobines d'entraînement (Sm) fonctionne en marche à vide.

4. Procédé selon la revendication 3, **caractérisé en ce que** dans la phase de mélange (B), l'au moins une partie des bobines d'entraînement (Sm) fonctionne alternativement en court-circuit sur un intervalle de court-circuit (tc_ks) et en marche à vide sur un intervalle de marche à vide (tc_ll), la durée de l'intervalle de court-circuit (tc_ks) et la durée de l'intervalle de marche à vide (tc_ll) étant déterminées.

5. Procédé selon la revendication 4, **caractérisé en ce que** dans la phase de mélange (B), la durée de l'intervalle de court-circuit (tc_ks) par rapport à la durée de l'intervalle de marche à vide (tc_ll) est calculée à l'aide d'un polynôme du troisième degré avec un écart d'erreur (e_ic).

6. Procédé selon l'une des revendications 3 à 5, **caractérisé en ce qu'**un facteur a de 0,85 est choisi.

7. Procédé selon l'une des revendications 2 à 6, **caractérisé en ce que** la relation prédéterminée est la suivante : $ic\_soll \frac{1}{\sqrt{2}} \frac{\Psi}{L},$ dans laquelle ic_soll est le courant de court-circuit de consigne, $\Psi$ est le flux principal et L est l'inductance insaturée.

8. Procédé selon l'une des revendications 1 à 6, **caractérisé en ce que** seules les bobines d'entraînement (Sm) accouplées magnétiquement à l'unité de transport (1) sont commutées dans le mode de court-circuit régulé (M).

9. Procédé selon la revendication 8, **caractérisé en ce que** les bobines d'entraînement (Sm) accouplées magnétiquement à l'unité de transport (1) sont déterminées au moyen d'un capteur de position.

10. Procédé selon la revendication 8, **caractérisé en ce que** les bobines d'entraînement (Sm) accouplées magnétiquement à l'unité de transport (1) sont détectées par l'intermédiaire d'un courant de court-circuit de bobine (icm) induit dans la bobine d'entraînement (Sm) respective.

11. Moteur linéaire à stator long (2) comportant une pluralité (m) de bobines d'entraînement (Sm) et au moins une unité de transport (1), une commande LLM (4) commandée par un régulateur de bobine (R) étant prévue, laquelle est conçue pour exciter les bobines d'entraînement (Sm) telle sorte qu'un champ magnétique accouplé à l'unité de transport (1) est déplacé le long d'une direction de déplacement (x) afin de déplacer l'unité de transport (1) le long de la direction de déplacement (x), **caractérisé en ce qu'**un régulateur de court-circuit (K) est prévu, lequel est conçu, lors d'une opération de freinage de l'unité de transport (1), pour court-circuiter au moins une partie des bobines d'entraînement (Sm) au moins pendant une première période de temps et pour fonctionner en marche à vide au moins pendant une seconde période de temps.

12. Moteur linéaire à stator long (2) selon la revendication 11, **caractérisé en ce que** le régulateur de court-circuit (K) est commuté en amont du régulateur de bobine (R) et est conçu pour ordonner au régulateur de bobine (R), lors d'une opération de freinage, de court-circuiter l'au moins une partie des bobines d'entraînement (Sm) au moins pendant une période de temps.

Fig. 1

Fig. 2a

Fig. 2b

$$ic = \sqrt{icq^2 + icd^2}$$

Fig. 3

Fig. 4

Fig. 5

Fig. 6a

Fig. 6b

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013143783 A1
- US 6876107 B2
- US 20130074724 A1
- WO 2004103792 A1
- US 20060220623 A1
- AT 518721 A1
- US 2012193172 A
- EP 0294541 A1
- EP 0289686 A2
- DE 2235705 A1
- AT 519238 A1